(19) Europäisches Patentamt
European Patent Office
Office européen des brevets

(11) **EP 4 249 941 A1**

(12) **EUROPEAN PATENT APPLICATION**

(43) Date of publication:
**27.09.2023 Bulletin 2023/39**

(21) Application number: **22163817.4**

(22) Date of filing: **23.03.2022**

(51) International Patent Classification (IPC):
**G01S 7/40** *(2006.01)* **G01S 13/931** *(2020.01)*

(52) Cooperative Patent Classification (CPC):
**G01S 7/403; G01S 7/4034; G01S 7/4091;
G01S 13/931; G01S 2013/93271**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Veoneer Sweden AB**
**447 37 Vårgårda (SE)**

(72) Inventor: **MARSCH, Sebastian**
**97464 Niederwerrn (DE)**

(74) Representative: **Westpatent AB**
**Almekärrsvägen 11**
**443 39 Lerum (SE)**

(54) **ALIGNMENT DETECTION FOR A VEHICLE RADAR TRANSCEIVER**

(57)    The present disclosure relates to a measuring system (12) for determining the alignment of a vehicle radar transceiver (3), having a pitch angle ($\varphi_p$) and a roll angle ($\varphi_r$). The measuring system (12) is adapted to:
- transmit radar signals (5),
- receive reflected radar signals (6) that have been reflected by at least one target object (7), and to
- determine a determined azimuth angle ($\theta_{det}$) and a determined elevation angle ($\psi_{det}$) to each target target object (7) relative a reference plane (R) by means of the reflected radar signals (6).
    The measuring system (12) is further adapted to:
- assume that each target object (7) and the radar transceiver (3) are positioned in a common plane (P) at a distance (d) from a ground level (G); and to
- estimate the pitch angle ($\alpha_p$) and the roll angle ($\alpha_r$) of the radar transceiver (3) with respect to a fixed coordinate system (x, y, z) using the determined angles ($\theta_{det}$, $\psi_{det}$) such that the equation

$$\psi_{det} = atan\left( sin(\theta_{det}) * tan(\varphi_r) - \frac{cos(\theta_{det}) * tan(\varphi_p)}{cos(\varphi_r)} \right)$$

is satisfied.

FIG. 2

**EP 4 249 941 A1**

**Description**

The present disclosure relates to determining the alignment of a vehicle radar transceiver, the alignment being defined by means of a pitch angle, a yaw angle and a roll angle, of the radar transceiver with respect to a fixed coordinate system,

Today, one or more radar transceivers may be mounted on a vehicle in order to detect reflections from surrounding objects in order to implement safety functions such as collision prevention as well as automated/assisted driving. In such a radar transceiver it is required to obtain an azimuth angle in the form of a target bearing angle, a distance with respect to the object, and a relative speed between the vehicle and the object. It is sometimes also necessary to report the elevation angle to the target.

For most vehicle radar applications it is important to measure the azimuth angle with a relatively high degree of precision. The angle accuracy of a radar system depends on fundamental parameters like number of receive channels, component tolerances, assembly precision and installation conditions.

A proper radar transceiver orientation when mounted in a vehicle is given when its x- and y- axis span a plane that is parallel to the vehicle's x-y-plane and its x-axis points along a specified mounting boresight direction. The full 3D misalignment is the triple of angles for which the radar sensor, or radar trasnsceiver, has to be rotated to get it from its proper orientation to the actual misaligned orientation. The first rotation is around its z-axis and is called yaw. The second rotation is around its Y axis and is called pitch and the third rotation is around its x-axis, it is called roll.

To transform a target coordinate from a radar transceivers coordinate system to a vehicle coordinate system it is crucial to know the full position and orientation of the radar transceivers coordinate system in the vehicle coordinate system. Due to mounting tolerances or due to impact of an accident it is possible that the radar sensor is misaligned in the pitch angle and/or the roll angle also. In this case a correct transform of radar targets to other coordinate systems (e.g. car coordinate system) is not possible, if the pitch and roll misalignment is not known. Additionally it is not possible to estimate yaw misalignment correctly, if pitch and roll misalignment are not known.

Radar transceivers can furthermore be affected by various vehicle components such as different types of bumpers and vehicle front and rear section geometries. Radar transceivers are also affected by variations during manufacturing and assembly. Sensor systems therefore require calibration to produce accurate sensor output signals. This calibration is often performed during manufacture in a factory, which is time-consuming and drives cost. Optimal calibration parameters may also change over time, which necessitates a re-calibration, which may be inconvenient.

It is an object of the present disclosure to present an alternative and less complicated method and system for detecting alignment and possible misalignment of a radar transceiver.

Said object is achieved by means of a measuring system for determining the alignment of a vehicle radar transceiver, the alignment being defined by means of a pitch angle $\varphi_p$ and a roll angle $\varphi_r$ of the radar transceiver with respect to a fixed coordinate system. The measuring system comprises a radar system that in turn comprises the radar transceiver and a control unit. The measuring system is adapted to transmit radar signals, receive reflected radar signals that have been reflected by at least one target object, and to determine a determined azimuth angle $\theta_{det}$ and a determined elevation angle $\psi_{det}$ to each target target object relative a reference plane R by means of the reflected radar signals. The measuring system is further adapted to assume that each target object and the radar transceiver are positioned in a common plane P at a distance d from a ground level G, and to estimate the pitch angle $\alpha_p$ and the roll angle $\alpha_r$ of the radar transceiver with respect to a fixed coordinate system using the determined angles $\theta_{det}$, $\psi_{det}$ such that the equation

$$\psi_{det} = atan\left(sin(\theta_{det}) * tan(\varphi_r) - \frac{cos(\theta_{det}) * tan(\varphi_p)}{cos(\varphi_r)}\right)$$

is satisfied.

This means that an accurate estimation of pitch angle $\alpha_p$ the roll angle $\alpha_r$ of the radar transceiver with respect to a fixed coordinate system can be obtained in a relatively uncomplicated manner. This estimation is based on the assumption that each target object and the radar transceiver are positioned in a common plane, and is based on the inventor's insight regarding how the pitch angle $\alpha_p$ and the roll angle $\alpha_r$ affect the determined azimuth angle $\theta_{det}$ and a determined elevation angle $\psi_{det}$.

According to some aspects, the measuring system is adapted to satisfy the equation by using a non-linear least square fit.

According to some aspects, the measuring system is adapted to satisfy the equation using Bayesian inference.

This means that well-known methods can be used to provide the desired estimation. Many other numerical methods are of course applicable.

This object is also achieved by means of methods and vehicles that are associated with the above advantages.

BRIEF DESCRIPTION OF THE DRAWINGS

The present disclosure will now be described more in detail with reference to the appended drawings, where:

Figure 1          shows a schematic top view of a vehicle and a measuring system;

Figure 2          shows a schematic side view of a radar transceiver and a target object;

Figure 3          shows a schematic perspective view of the radar transceiver in a coordinate system;

Figure 4          shows a schematic first view of the radar transceiver in the coordinate system;

Figure 5          shows a schematic second view of the radar transceiver in the coordinate system;

Figure 6          shows a schematic third view of the radar transceiver in the coordinate system;

Figure 7          shows a schematic side perspective view of a radar transceiver target objects;

Figure 8A - 8D    illustrate azimuth cuts for different determined azimuth angles;

Figure 9          shows a graphical representation of how determined azimuth angle and determined elevation angle relate to each other for a certain misalignment;

Figure 10         illustrates nonlinear parameter optimization for a cross traffic scenario with no mounting error;

Figure 11         illustrates nonlinear parameter optimization for a cross traffic scenario with no mounting error;

Figure 12         illustrates nonlinear parameter optimization for a cross traffic scenario with a mounting error;

Figure 13         illustrates nonlinear parameter optimization for a cross traffic scenario with a mounting error;

Figure 14-16      illustrate Bayesian inference for a cross traffic scenario with no mounting error;

Figure 17-19      illustrate Bayesian inference for a cross traffic scenario with a mounting error;

Figure 20         schematically illustrates a control unit;

Figure 21         shows an example computer program product; and

Figure 22         shows a flowchart for methods according to the present disclosure.

DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the disclosure. As used herein, the singular forms "a", "an" and "the" are intended to include the plural forms as well, unless the context clearly indicates otherwise.

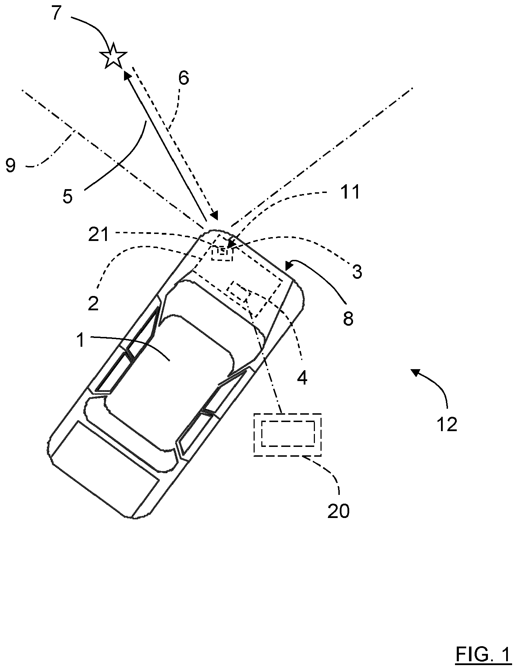

Figure 1 shows a top view of a vehicle 1 that comprises a radar system 2 that in turn comprises a vehicle radar transceiver 3 and a control unit 4. The radar transceiver 3 has a certain field of view (FOV) 9 and a front side 11 comprising a radar aperture.

According to some aspects, the radar transceiver 3 is positioned behind or inside a bumper 8 which serves as a radome for the radar transceiver 3.

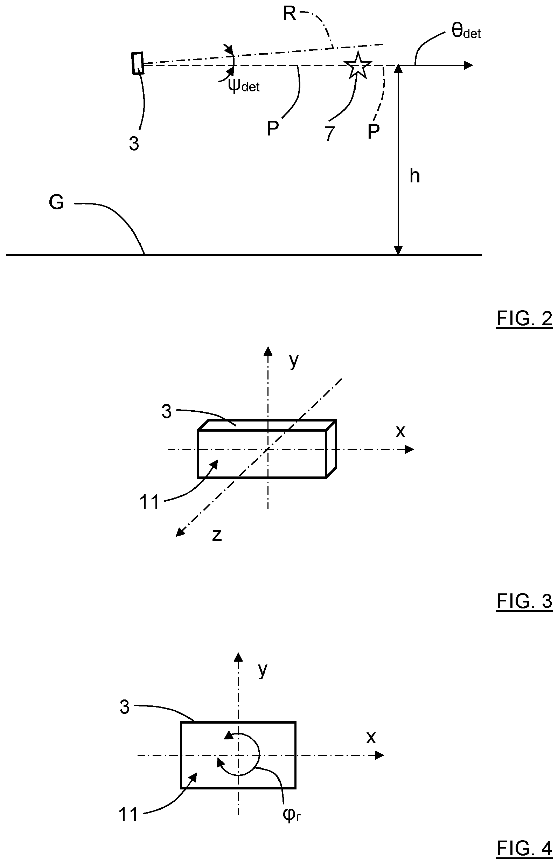

Figure 1 further shows a measuring system 12 for determining the alignment of the vehicle radar transceiver 3, where the alignment is defined by means of a pitch angle $\varphi_p$, a yaw angle $\varphi_y$ and a roll angle $\varphi_r$ of the radar transceiver 3 with respect to a fixed coordinate system x, y, z as shown in Figure 3-6. Figure 3 shows a schematic perspective view of the radar transceiver 3 in a coordinate system x, y, z, and Figure 4 - Figure 6 show a schematic views of the radar transceiver 3 with its front side 11 in the coordinate system x, y, z, illustrating the pitch angle $\varphi_p$, the yaw angle $\varphi_y$ and the roll angle $\varphi_r$ of the radar transceiver 3.

The measuring system 12 comprises the radar system 2 that in turn comprises the radar transceiver 3 and the control unit 4. According to some aspects, the measuring system 12 further comprises at least one target object 7, for example when the target object 7 is comprised in a predetermined test set-up.

With reference also to Figure 2, the measuring system 12 is adapted to transmit radar signals 5, to receive reflected radar signals 6 that have been reflected by the target object 7, and to determine a determined azimuth angle $\theta_{det}$ and a determined elevation angle $\psi_{det}$ to the target object 7 relative a reference plane R by means of the reflected radar signals 6.

For this purpose, the radar transceiver 3 is adapted to transmit radar signals 5 and receive reflected radar signals 6 that have been reflected by a target object 7. The control unit 4 is adapted to control the radar transceiver 3, for example transmission timing, transmission frequency content, as well as the actual transmitted time waveform. The control unit 4 is according to some aspects also adapted to perform signal processing in order to extract target data related to the detected target objects, for example 2D FFT for obtaining a Range-Doppler matrix in a previously well-known manner. According to some aspects, the control unit 4 is connected to an external computer device 20.

According to the present disclosure, the measuring system 12 is further adapted to assume that the target object 7 and the radar transceiver 3 are positioned in a common plane P at a distance d from a ground level G, and to estimate the pitch angle $\alpha_p$ and the roll angle $\alpha_r$ of the radar transceiver 3 with respect to a fixed coordinate system x, y, z using on the determined angles $\theta_{det}$, $\psi_{det}$ such that the equation

$$\psi_{det} = atan\left(sin(\theta_{det}) * tan(\varphi_r) - \frac{cos(\theta_{det}) * tan(\varphi_p)}{cos(\varphi_r)}\right) \quad \dots \quad (1)$$

is satisfied.

This means that an accurate estimation of pitch angle $\alpha_p$ the roll angle $\alpha_r$ of the radar transceiver 3 with respect to a fixed coordinate system x, y, z can be obtained in a relatively uncomplicated manner.

According to some aspects, the measuring system 12 comprises target objects 7 that have been determined to be moving.

The present disclosure is based on the inventor's insight regarding how the pitch angle $\alpha_p$ and the roll angle $\alpha_r$ affect the determined azimuth angle $\theta_{det}$ and a determined elevation angle $\psi_{det}$.

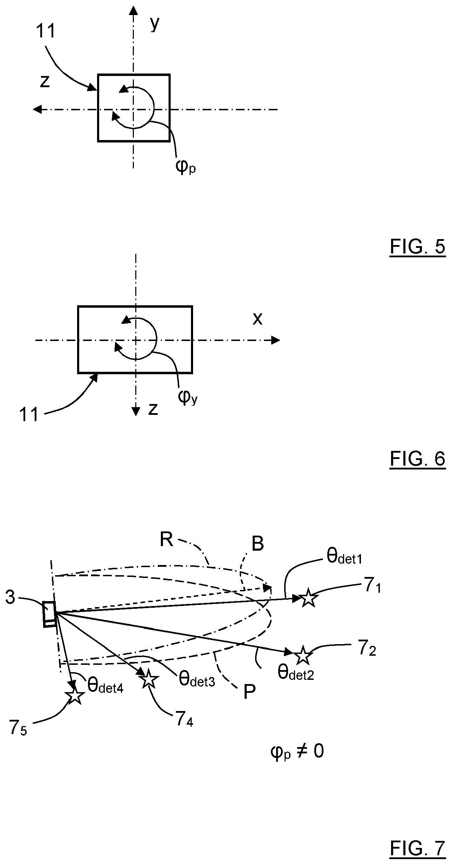

This is illustrated in Figure 7 where there is a certain error due to pitch misalignment such that $\varphi_p \neq 0$. This means that, depending on the determined azimuth angle $\theta_{det1}$, $\theta_{det2}$, $\theta_{det3}$, $\theta_{det4}$ of the target object $7_1$, $7_2$, $7_3$, $7_4$, the determined elevation angle $\psi_{det}$ will assume different values. The target objects $7_1$, $7_2$, $7_3$, $7_4$ and the radar transceiver 3 are assumed to lie in the common plane P.

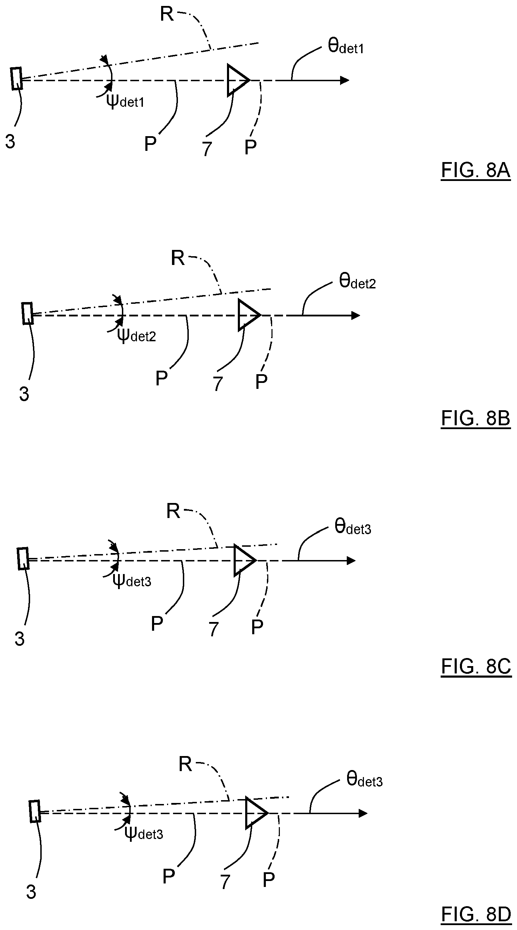

Figure 8A - Figure 8D illustrates this by showing corresponding azimuth cuts for the different determined azimuth angles $\theta_{1det}$, $\theta_{2det}$, $\theta_{3det}$, $\theta_{4det}$ of the target object $7_1$, $7_2$, $7_3$, $7_4$ as illustrated in Figure 7.

Figure 8A shows a case where there is a first target object $7_1$ at a first determined azimuth angle $\theta_{det1}$ and at a first determined elevation angle $\psi_{det1}$.

Figure 8B shows a case where there is a second target object $7_2$ at a second determined azimuth angle $\theta_{det2}$ and at a second determined elevation angle $\psi_{det2}$.

Figure 8C shows a case where there is a third target object $7_3$ at a third determined azimuth angle $\theta_{det3}$ and at a third determined elevation angle $\psi_{det3}$.

Figure 8D shows a case where there is a fourth target object $7_4$ at a fourth determined azimuth angle $\theta_{4det}$ and at a fourth determined elevation angle $\psi_{det4}$.

The larger the determined azimuth angle becomes relative a boresight direction B, the smaller the determined elevation angle becomes due to the pitch misalignment that separates the common plane P from the reference plane R.

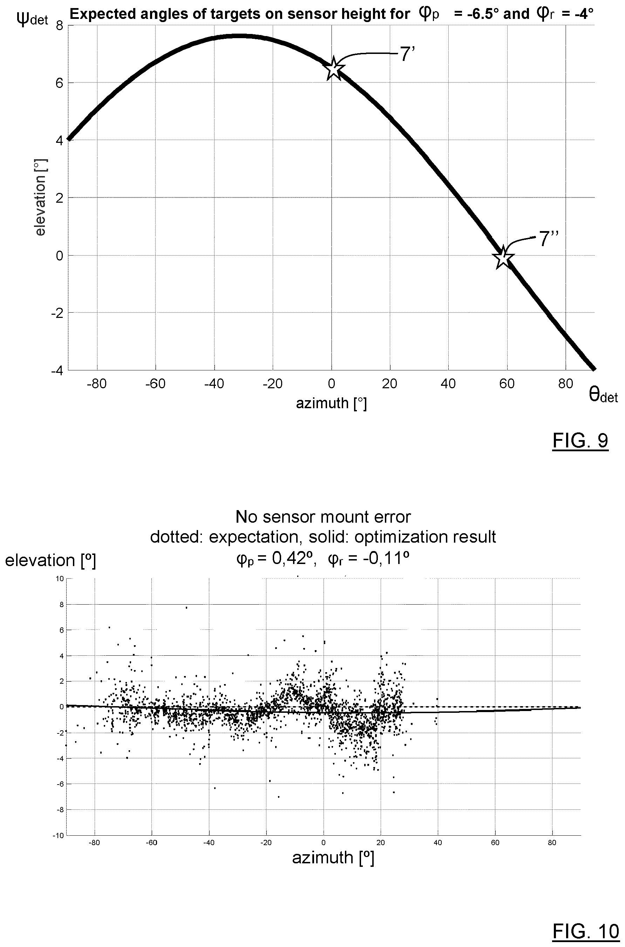

Figure 9 provides a graphical representation of how the determined azimuth angle and the determined elevation angle relates to each other for a pitch misalignment of $\varphi_p$ = -6,5° and a roll misalignment of $\varphi_r$ = -4,0°. For example, a target object 7' that is detected at determined azimuth angle $\theta_{det}$ = 0,0° will approximately result in a determined elevation angle $\psi_{det} \approx$ 6,5°, and a target object 7'' that is detected at determined elevation angle $\psi_{det}$ = 0,0 ° will approximately result in a determined azimuth angle $\theta_{det} \approx$ 59 °.

Different determined values for determined azimuth angle $\theta_{det}$ and determined elevation angle $\psi_{det}$ can thus be used to determine the pitch alignment error and the roll alignment error by finding these angular values $\varphi_p$, $\varphi_r$ that satisfy equation (1) above for at least one determined azimuth angles $\theta_{det}$ and at least one determined elevation angles $\psi_{det}$. Typically, a plurality of detections are used.

According to some aspects, the boresight direction B lies in the reference plane R.

Different numerical methods can be used to solve for the pitch misalignment angle $\varphi_p$ and the roll misalignment angle $\varphi_r$. Examples of cases using different numerical methods will be disclosed in the following.

According to some aspects, with reference to Figure 10-13, the measuring system 12 is adapted to satisfy the equation by using a non-linear least square fit by means of nonlinear parameter optimization. In the examples described, there is a cross traffic scenario with five crossing cars, and the radar transceiver 3 is mounted behind the bumper 8.

Figure 10 illustrates a nonlinear parameter optimization without any mounting error, i.e., with a pitch misalignment of $\varphi_p = 0°$ and a roll misalignment of $\varphi_r = 0°$ where the resulting calculated pitch misalignment is $\varphi_p = 0,42°$ and the resulting calculated roll misalignment is $\varphi_r = -0,11°$. The dots relate to expectation and the solid line relates to the result of the nonlinear parameter optimization, both as a function of azimuth angle and elevation angle.

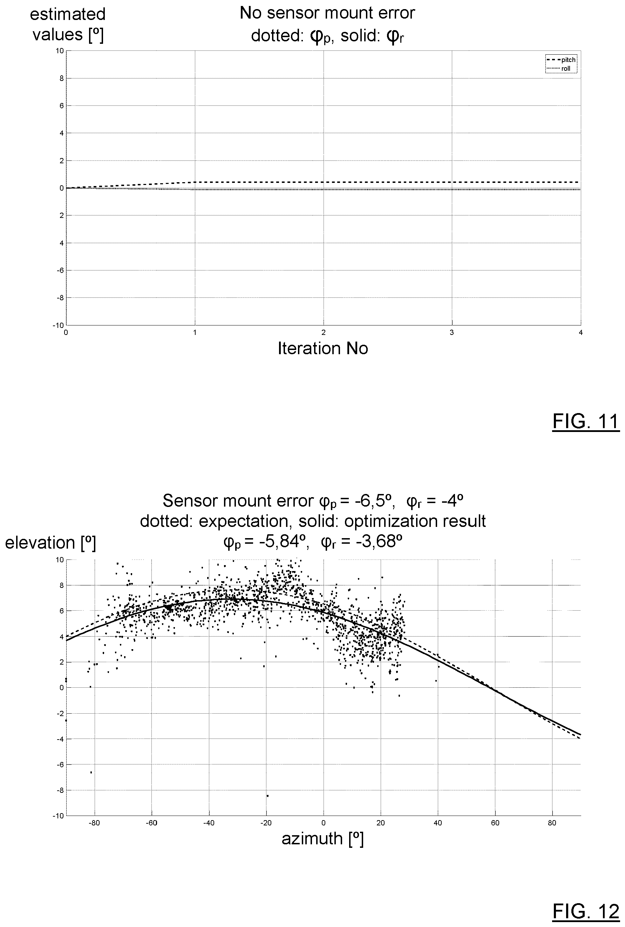

Figure 11 illustrates the estimated parameter values shown as a function of the number of iterations for the parameter optimization described above with reference to Figure 10. The x-axis shows the number of iteration, and the y-axis shows the estimated parameter values.

Figure 12 illustrates a nonlinear parameter optimization with a with a pitch misalignment of $\varphi_p = -6.5°$ and a roll misalignment of $\varphi_r = -4.0°$, where the resulting calculated pitch misalignment is $\varphi_p = -5,84°$ and the resulting calculated roll misalignment is $\varphi_r = -3,68°$. The dots relate to expectation and the solid line relates to the result of the nonlinear parameter optimization, both as a function of azimuth angle and elevation angle.

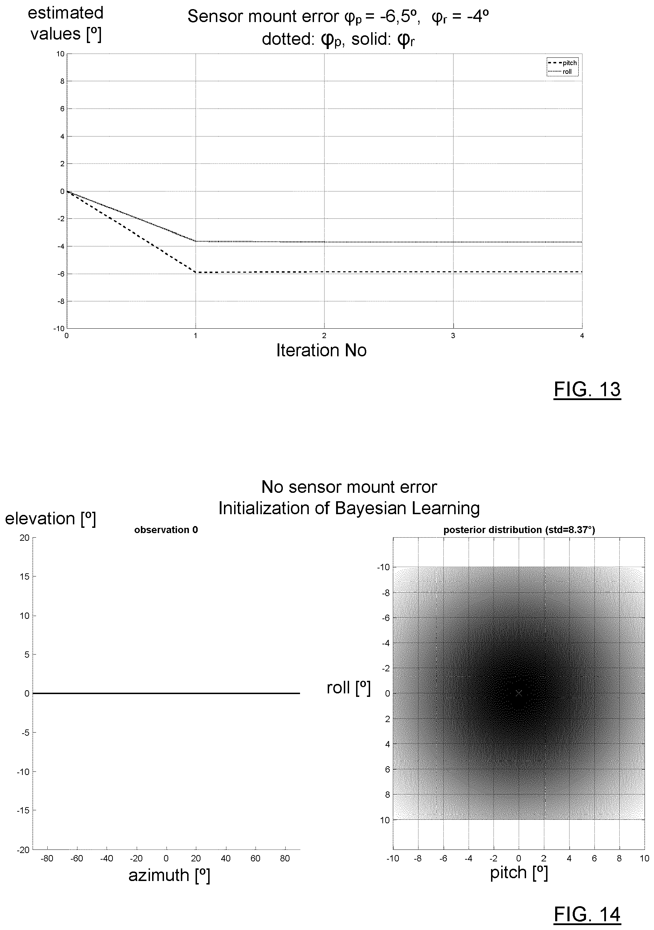

Figure 13 illustrates the estimated parameter values shown as a function of the number of iterations for the parameter optimization described above with reference to Figure 12. The x-axis shows the number of iteration, and the y-axis shows the estimated parameter values.

According to some aspects, with reference to Figure 14-19, the measuring system 12 is adapted to satisfy the equation by using Bayesian inference. In the examples described, there is a cross traffic scenario with five crossing cars, and the radar transceiver 3 is mounted behind the bumper 8.

Figures 14- Figure 19 visualize the mechanics of Bayesian inference where an observation of detected target objects is used to refine knowledge about the parameters that is present in the form of a distribution. A prior parameter distribution is updated with each observation to a posterior parameter distribution. As more and more observations of detected target objects get observed the posterior distribution gets sharper over time. In each left-hand diagram, the x-axis shows an azimuth angle and the y-axis shows an elevation angle for the observations. In each right-hand diagram the x-axis shows a radar transceiver pitch misalignment angle, and the y-axis shows a radar transceiver roll misalignment angle.

In Figure 14 - Figure 16 there is no mounting error, i.e., there is a pitch misalignment of $\varphi_p = 0°$ and a roll misalignment of $\varphi_r = 0°$.

In Figure 14, after 0 observations, no observation of detected target objects has been captured, so the distribution of pitch and roll is the initial distribution. The resulting calculated pitch misalignment is $\varphi_p = 0°$ and the resulting calculated roll misalignment is $\varphi_r = 0°$.

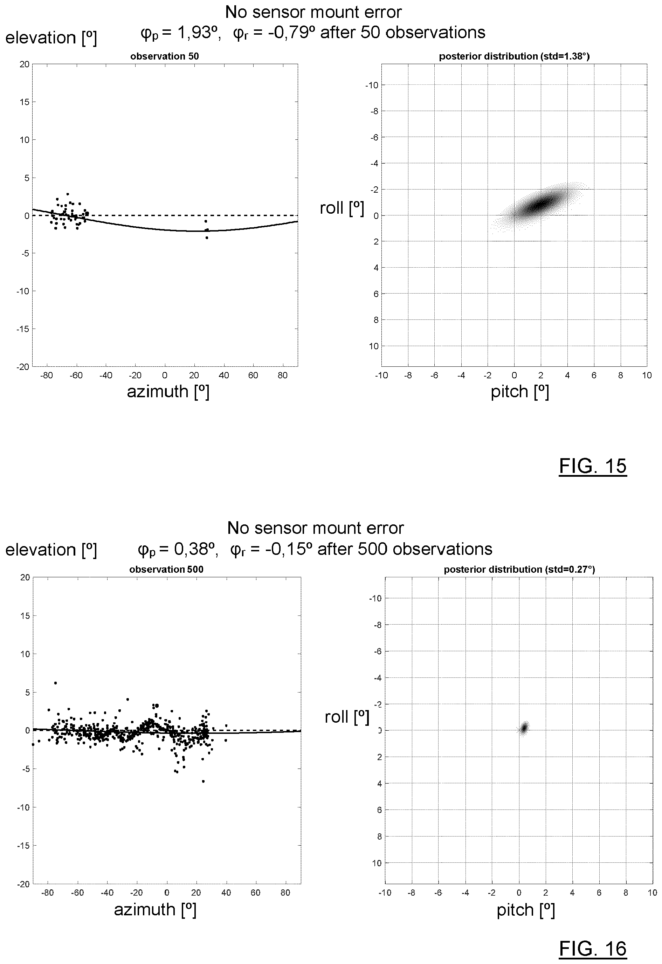

Figure 15 shows the posterior distribution after 50 observations; the resulting calculated pitch misalignment is $\varphi_p = 1,93°$ and the resulting calculated roll misalignment is $\varphi_r = -0,79°$.

Figure 16 shows the posterior distribution after 500 observations; the resulting calculated pitch misalignment is $\varphi_p = 0,38°$ and the resulting calculated roll misalignment is $\varphi_r = -0,15°$. The result is very precise at this time, and thus an estimation for the parameters pitch misalignment angle $\varphi_p$ and roll misalignment angle $\varphi_r$ can be determined.

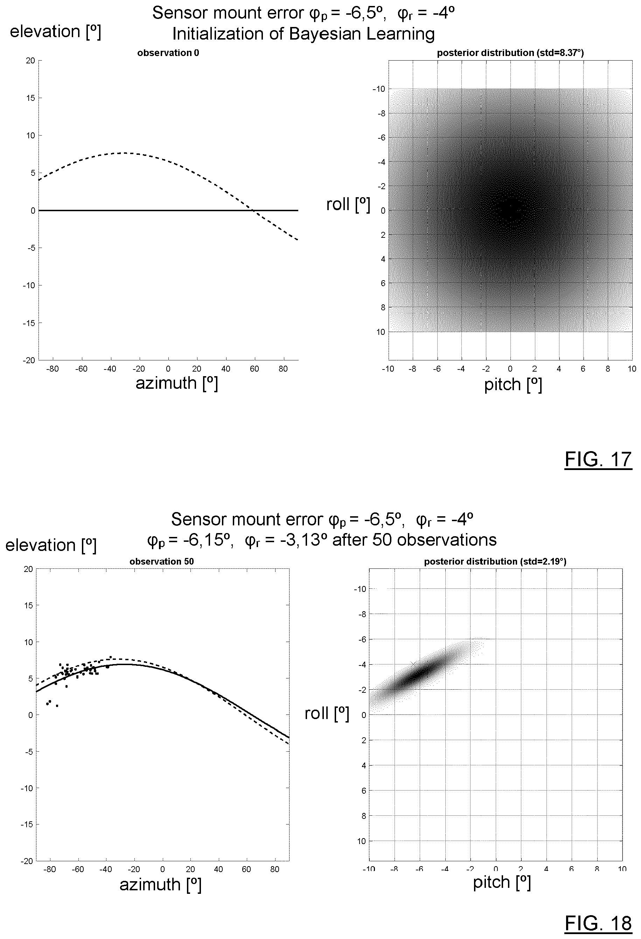

In Figure 17 - Figure 19 there is a mounting error; there is a pitch misalignment of $\varphi_p = -6,5°$ and a roll misalignment of $\varphi_r = -4°$.

In Figure 17, after 0 observations, no observation of detected target objects has been captured, so the distribution of pitch and roll is the initial distribution. The resulting calculated pitch misalignment is $\varphi_p = 0°$ and the resulting calculated roll misalignment is $\varphi_r = 0°$.

Figure 18 shows the posterior distribution after 50 observations; the resulting calculated pitch misalignment is $\varphi_p = -6,15°$ and the resulting calculated roll misalignment is $\varphi_r = -3,13°$.

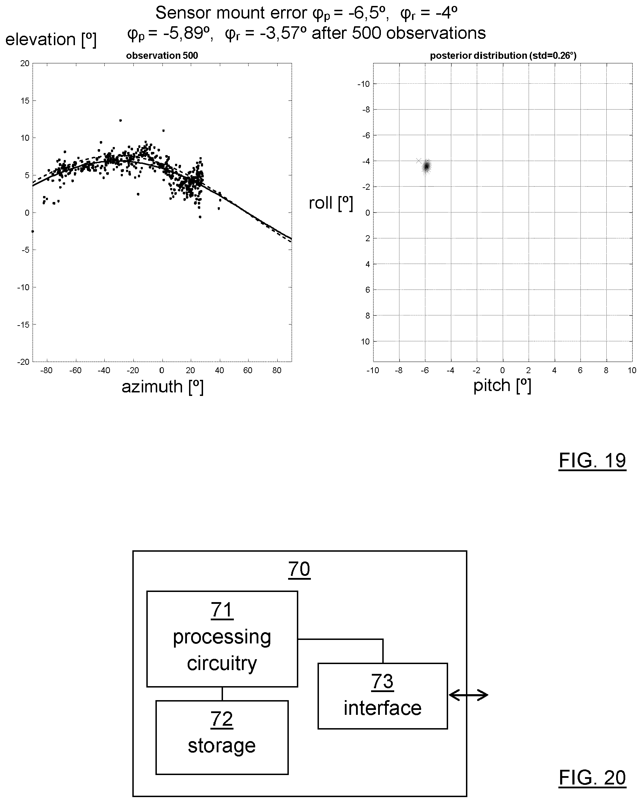

Figure 19 shows the posterior distribution after 500 observations; the resulting calculated pitch misalignment is $\varphi_p = -5,89°$ and the resulting calculated roll misalignment is $\varphi_r = -3,57°$. The result is very precise at this time, and thus an estimation for the parameters pitch misalignment angle $\varphi_p$ and roll misalignment angle $\varphi_r$ can be determined.

Only one implementation example has been provided for each one of the numerical methods described above, there are of course many other ways to implement these methods.

Furthermore, the numerical methods described above only present examples of how to derive the pitch misalignment angle $\varphi_p$ and the roll misalignment angle $\varphi_r$, many other such numerical methods are of course conceivable and apparent for the skilled person.

According to some aspects, having determined the pitch misalignment angle $\varphi_p$ and the roll misalignment angle $\varphi_r$, these can be stored in a memory and used by the control unit 4 that is adapted to performed a compensation for following detections of target objects such that the determined pitch misalignment angle $\varphi_p$ and the roll misalignment

angle $\varphi_r$ are compensated for.

As described more in detail below, a control unit and a computer program can according to some aspects be used to determine the most likely misalignment values of pitch angle $\varphi_p$ and roll angle $\varphi_r$.

Figure 20 schematically illustrates, in terms of a number of functional units, the components of a control unit 70, corresponding to the control unit 4 described, according to an embodiment. Processing circuitry 71 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 72. The processing circuitry 71 may further be provided as at least one application specific integrated circuit (ASIC), or field programmable gate array (FPGA).

Particularly, the processing circuitry 71 is configured to cause the control unit 70 to perform a set of operations, or steps. These operations, or steps, were discussed above in connection to the various measuring systems 12 and methods. For example, the storage medium 72 may store the set of operations, and the processing circuitry 71 may be configured to retrieve the set of operations from the storage medium 72 to cause the control unit 70 to perform the set of operations. The set of operations may be provided as a set of executable instructions. Thus, the processing circuitry 71 is thereby arranged to execute methods and operations as herein disclosed.

The storage medium 72 may also comprise persistent storage, which, for example, can be any single one or combination of magnetic memory, optical memory, solid state memory or even remotely mounted memory.

The control unit 70 may further comprise a communications interface 73 for communications with at least one other unit. As such, the interface 73 may comprise one or more transmitters and receivers, comprising analogue and digital components and a suitable number of ports for wired or wireless communication.

The processing circuitry 71 is adapted to control the general operation of the control unit 70 e.g. by sending data and control signals to the external unit and the storage medium 72, by receiving data and reports from the external unit, and by retrieving data and instructions from the storage medium 72. Other components, as well as the related functionality, of the control unit 70 are omitted in order not to obscure the concepts presented herein.

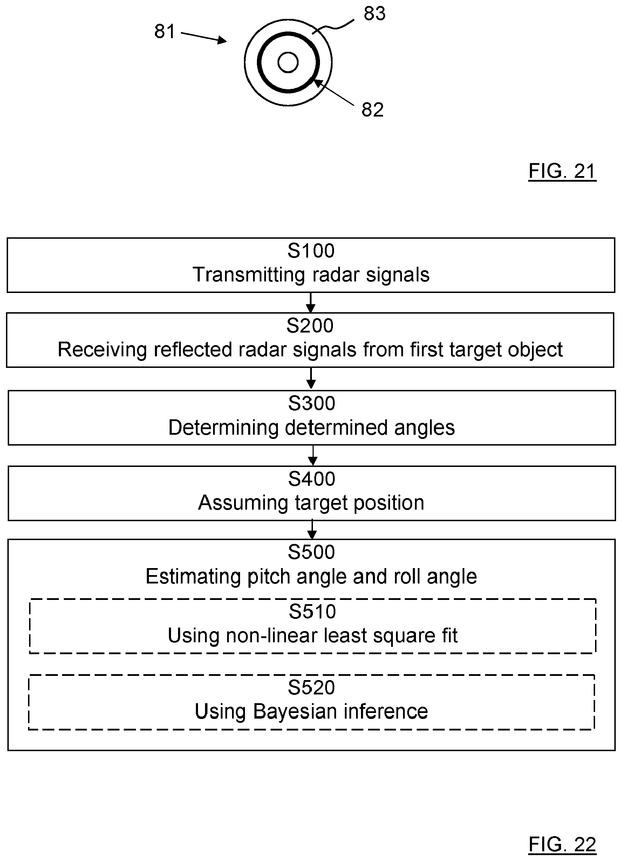

Figure 21 shows a computer program product 81 comprising computer executable instructions 82 arranged on a computer readable medium 83 to execute any of the methods disclosed herein.

With reference to Figure 22, the present disclosure also relates to a method for determining the alignment of a vehicle radar transceiver 3, the alignment being defined by means of a pitch angle $\varphi_p$ and a roll angle $\varphi_r$ of the radar transceiver 3 with respect to a fixed coordinate system x, y, z. The method comprises transmitting S100 radar signals 5, receiving S200 reflected radar signals 6 that have been reflected by at least one target object 7, and determining S300 a determined azimuth angle $\theta_{det}$ and a determined elevation angle $\psi_{det}$ to each target object 7 relative a reference plane R using the reflected radar signals 6.

The method further comprises assuming S400 that each target object 7 and the radar transceiver 3 are positioned in a common plane P at a distance h from a ground level G; and estimating S500 the pitch angle $\alpha_p$ and the roll angle $\alpha_r$ of the radar transceiver 3 with respect to a fixed coordinate system x, y, z using the determined angles $\theta_{det}$, $\psi_{det}$ such that the equation

$$\psi_{det} = atan\left(sin(\theta_{det}) * tan(\varphi_r) - \frac{cos(\theta_{det}) * tan(\varphi_p)}{cos(\varphi_r)}\right)$$

is satisfied.

According to some aspects, the method comprises using target objects 7 that have been determined to be moving.

According to some aspects, the method comprises satisfying S510 the equation by using a non-linear least square fit.

According to some aspects, the method comprises satisfying S520 the equation by using Bayesian inference.

The present disclosure is not limited to the examples discussed, but may vary freely within the scope of the appended claims. For example, the radar transceivers can be of any suitable kind, and can according to some aspects comprise suitable devices such as antennas, transmitters, receivers, control units etc.

The control unit 4 may be constituted by one unit or by two or more distributed sub-units. The control unit 4 can according to some aspects be adapted to perform one or more of the steps described to be performed by the measuring system 12.

The present disclosure can be applied to any suitable radar transceiver or radar transceivers comprised in the radar system 2.

The present disclosure is for example useful in the cases where the radar transceiver 3 is not accessible to the person performing an alignment test, e.g. to put a tilt meter on it. Hence the person performing an alignment test requires a way to know that the radar transceiver 3 is aligned on the vehicle within the tolerance agreed by the radar manufacturer, which is provided by means of the present disclosure.

According to some aspects, alignment of the radar transceiver 3 is directed towards alignment of antennas 21 comprised in the radar transceiver 3, the antennas 21 being adapted to transmit radar signals and receive reflected radar signals in a well-known manner. According to some aspects, a radar transceiver 3 is an integrated unit, where an adjustment or misalignment of the radar transceiver 3 directly affects the antennas 21 comprised in the radar transceiver 3.

It should be noted that when it mentioned that each target object 7 and the radar transceiver 3 are positioned in a common plane P at a distance h from a ground level G, this is an assumption that is made. This does not necessarily mean that this is the case in practice.

**Claims**

1. A method for determining the alignment of a vehicle radar transceiver (3), the alignment being defined by means of a pitch angle ($\varphi_p$) and a roll angle ($\varphi_r$) of the radar transceiver (3) with respect to a fixed coordinate system (x, y, z), where the method comprises:

   transmitting (S100) radar signals (5);
   receiving (S200) reflected radar signals (6) that have been reflected by at least one target object (7); and
   determining (S300) a determined azimuth angle ($\theta_{det}$) and a determined elevation angle ($\psi_{det}$) to each target object (7) relative a reference plane (R) using the reflected radar signals (6) ;
   wherein the method further comprises:

   assuming (S400) that each target object (7) and the radar transceiver (3) are positioned in a common plane (P) at a distance (h) from a ground level (G); and
   estimating (S500) the pitch angle ($\alpha_p$) and the roll angle ($\alpha_r$) of the radar transceiver (3) with respect to a fixed coordinate system (x, y, z) using the determined angles ($\theta_{det}$, $\psi_{det}$) such that the equation

$$\psi_{det} = atan\left( sin(\theta_{det}) * tan(\varphi_r) - \frac{cos(\theta_{det}) * tan(\varphi_p)}{cos(\varphi_r)} \right)$$

   is satisfied.

2. The method according to claim 1, wherein the method comprises using target objects (7) that have been determined to be moving.

3. The method according to any one of the claims 1 or 2, wherein the method comprises satisfying (S510) the equation by using a non-linear least square fit.

4. The method according to any one of the claims 1 or 2, wherein the method comprises satisfying (S520) the equation by using Bayesian inference.

5. A measuring system (12) for determining the alignment of a vehicle radar transceiver (3), the alignment being defined by means of a pitch angle ($\varphi_p$) and a roll angle ($\varphi_r$) of the radar transceiver (3) with respect to a fixed coordinate system (x, y, z), where the measuring system (12) comprises a radar system (2) that in turn comprises the radar transceiver (3) and a control unit (4), where the measuring system (12) is adapted to:

   - transmit radar signals (5),
   - receive reflected radar signals (6) that have been reflected by at least one target object (7), and to
   - determine a determined azimuth angle ($\theta_{det}$) and a determined elevation angle ($\psi_{det}$) to each target target object (7) relative a reference plane (R) by means of the reflected radar signals (6);
   **characterized in that** the measuring system (12) further is adapted to:

   - assume that each target object (7) and the radar transceiver (3) are positioned in a common plane (P) at a distance (d) from a ground level (G); and to
   - estimate the pitch angle ($\alpha_p$) and the roll angle ($\alpha_r$) of the radar transceiver (3) with respect to a fixed coordinate system (x, y, z) using the determined angles ($\theta_{det}$, $\psi_{det}$) such that the equation

$$\psi_{det} = atan\left( sin(\theta_{det}) * tan(\varphi_r) - \frac{cos(\theta_{det}) * tan(\varphi_p)}{cos(\varphi_r)} \right)$$

is satisfied.

6. The measuring system according to claim 5, wherein the measuring system (12) comprises target objects (7) that have been determined to be moving.

7. The measuring system according to any one of the claims 5 or 6, wherein the measuring system (12) is adapted to satisfy the equation by using a non-linear least square fit.

8. The measuring system according to any one of the claims 5 or 6, wherein the measuring system (12) is adapted to satisfy the equation using Bayesian inference.

9. A vehicle (1) comprising the measuring system (12) according to any one of the claims 5-8.

FIG. 1

FIG. 2

FIG. 3

FIG. 4

FIG. 5

FIG. 6

$$\varphi_p \neq 0$$

FIG. 7

FIG. 8A

FIG. 8B

FIG. 8C

FIG. 8D

$\psi_{det}$ 8  **Expected angles of targets on sensor height for** $\phi_p$ = -6.5° **and** $\phi_r$ = -4°

elevation [°]

7'

7''

azimuth [°]  $\theta_{det}$

FIG. 9

No sensor mount error
dotted: expectation, solid: optimization result
$\phi_p = 0{,}42°$, $\phi_r = -0{,}11°$

elevation [°]

azimuth [°]

FIG. 10

estimated
values [°]

No sensor mount error
dotted: $\varphi_p$, solid: $\varphi_r$

Iteration No

<u>FIG. 11</u>

Sensor mount error $\varphi_p$ = -6,5°,  $\varphi_r$ = -4°
dotted: expectation, solid: optimization result

elevation [°]  $\varphi_p$ = -5,84°,  $\varphi_r$ = -3,68°

azimuth [°]

<u>FIG. 12</u>

estimated
values [º]

Sensor mount error φ_p = -6,5º,  φ_r = -4º
dotted: φ_p, solid: φ_r

FIG. 13

No sensor mount error
Initialization of Bayesian Learning

elevation [º]

observation 0

posterior distribution (std=8.37°)

roll [º]

azimuth [º]

pitch [º]

FIG. 14

No sensor mount error
$\varphi_p = 1{,}93°$, $\varphi_r = -0{,}79°$ after 50 observations

FIG. 15

No sensor mount error
$\varphi_p = 0{,}38°$, $\varphi_r = -0{,}15°$ after 500 observations

FIG. 16

Sensor mount error $\varphi_p$ = -6,5°,  $\varphi_r$ = -4°
Initialization of Bayesian Learning

FIG. 17

Sensor mount error $\varphi_p$ = -6,5°,  $\varphi_r$ = -4°
$\varphi_p$ = -6,15°,  $\varphi_r$ = -3,13° after 50 observations

FIG. 18

Sensor mount error $\varphi_p$ = -6,5°, $\varphi_r$ = -4°
$\varphi_p$ = -5,89°, $\varphi_r$ = -3,57° after 500 observations

FIG. 19

FIG. 20

81 → 83

82

**FIG. 21**

| S100 |
| Transmitting radar signals |

↓

| S200 |
| Receiving reflected radar signals from first target object |

↓

| S300 |
| Determining determined angles |

↓

| S400 |
| Assuming target position |

↓

| S500 |
| Estimating pitch angle and roll angle |
| S510 |
| Using non-linear least square fit |
| S520 |
| Using Bayesian inference |

**FIG. 22**

Europäisches
Patentamt

European
Patent Office

Office européen
des brevets

# EUROPEAN SEARCH REPORT

Application Number

EP 22 16 3817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 012246 A1 (DAIMLER AG [DE]) 3 March 2016 (2016-03-03) | 1-9 | INV.<br>G01S7/40<br>G01S13/931 |
| Y | * paragraphs [0034] – [0052]; figures 7-11 * | 1-9 | |
| Y | WO 2021/070916 A1 (DENSO CORP [JP]) 15 April 2021 (2021-04-15) * the whole document * & US 2022/229168 A1 (KONDO KATSUHIKO [JP] ET AL) 21 July 2022 (2022-07-21) * the whole document * & US 2022/229168 A1 (KONDO KATSUHIKO [JP] ET AL) 21 July 2022 (2022-07-21) * the whole document * | 1-9 | |

TECHNICAL FIELDS
SEARCHED      (IPC)

G01S

The present search report has been drawn up for all claims

| Place of search | Date of completion of the search | Examiner |
|---|---|---|
| Munich | 18 September 2022 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 22 16 3817

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2022

| Patent document cited in search report | Publication date | Patent family member(s) | Publication date |
|---|---|---|---|
| DE 102015012246 A1 | 03-03-2016 | NONE | |
| WO 2021070916 A1 | 15-04-2021 | CN 114556143 A | 27-05-2022 |
| | | DE 112020004880 T5 | 21-07-2022 |
| | | JP 2021060371 A | 15-04-2021 |
| | | US 2022229168 A1 | 21-07-2022 |
| | | WO 2021070916 A1 | 15-04-2021 |

EPO FORM P0459

For more details about this annex : see Official Journal of the European Patent Office, No. 12/82